# EUROPÄISCHE PATENTSCHRIFT

(11) **EP 2 562 480 B1**
(45) Veröffentlichungstag und Bekanntmachung des Hinweises auf die Patenterteilung: **07.03.2018**
(21) Anmeldenummer: 12181167.3
(22) Anmeldetag: 21.08.2012
(51) Int. Cl.: F24C 7/08, G01J 5/60, H05B 3/74

(54) **Kochfeld mit Überwachungsvorrichtung**
Hot Plate with Monitoring Device
Champs de cuisson avec dispositif de surveillance

(30) Priorität: 22.08.2011 DE 102011081303
(43) Veröffentlichungstag der Anmeldung: 27.02.2013
(73) Patentinhaber: BSH Hausgeräte GmbH, 81739 München (DE)
(72) Erfinder: Harder, Stefan, 86415 Mering (DE); Has, Uwe, 84579 Unterneukirchen (DE); Schuhbäck, Peter, 83329 Holzhausen (DE); Zeraschi, Monika, 83301 Traunreut (DE)

(56) Entgegenhaltungen:
- EP-A1- 1 857 791
- EP-A1- 2 748 534
- EP-A2- 1 615 469
- WO-A1-2005/069693
- WO-A1-2005/111561
- WO-A1-2008/148529
- DE-A1- 4 243 004
- DE-A1-102008 041 390
- JP-A- 2008 215 718
- US-A1- 2002 070 211
- US-A1- 2007 045 277
- US-B1- 6 169 486

## Beschreibung

Die Erfindung betrifft eine Überwachungsvorrichtung für ein Kochfeld, aufweisend einen ersten Infrarotsensor zur Infrarotmessung des Kochfelds in einem ersten Spektralbereich. Die Erfindung betrifft ferner ein Haushaltsgerätesystem mit mindestens einem Kochfeld und einer solchen Überwachungsvorrichtung. Die Erfindung betrifft auch ein Verfahren zum Überwachen eines Kochfelds, wobei zumindest ein Teil des Kochfelds mittels einer Infrarotmessung in einem ersten Spektralbereich überwacht wird.

Eine gattungsgemäße Überwachungsvorrichtung zur Überwachung zumindest eines Kochbereichs eines Kochfelds, ist aus WO 2010/020541 A1 bekannt. Die Überwachungsvorrichtung ist zu einer Erfassung in einem Infrarotbereich vorgesehen und weist dazu zumindest eine Sensoreinheit mit einer Mehrzahl von Infrarotsensoren auf, die in einem Sensorfeld angeordnet sind. Die Überwachungsvorrichtung kann eine Auswerteeinheit aufweisen, die zu einer Bildauswertung von durch die Sensoreinheit erfassten Daten vorgesehen ist. Zur Erkennung einer Anwendungssituation bei einem Betrieb des Kochfelds können die Auswerteeinheit und die Sensoreinheit im Zusammenwirken dazu vorgesehen sein, eine zeitliche Folge von Bildern des Kochbereichs zu erfassen und auszuwerten. Insbesondere kann die Auswerteeinheit dazu vorgesehen sein, einer Änderung einer in zumindest zwei verschiedenen Bildern ermittelten Kontur eine Anwendungssituation zuzuordnen. Zudem kann die Anordnung der Infrarotsensoren im Sensorfeld eine Rasterung des zu überwachenden Kochbereichs bewirken, und einer Erstreckungsrichtung des zu überwachenden Kochbereichs können zumindest acht Raster, insbesondere zumindest sechzehn Raster, zugeordnet sein. Das Sensorfeld kann ein zweidimensionales Feld sein. Das Sensorfeld kann eine quadratische Matrixanordnung sein. Die Sensoreinheit kann ein Blickfeld aufweisen, das sich bis in einen Aufenthaltsbereich für einen Kochfeldbenutzer bei einer Bedienung des Kochfelds erstreckt. Die Überwachungseinheit kann als eine Sicherheitsvorrichtung zur Erkennung einer Gefahrensituation bei einer Bedienung des Kochfelds ausgebildet sein. Mit der räumlich aufgelösten Temperaturmessung aus WO 2010/020541 A1 ist die Möglichkeit einer genauen Temperaturmessung für jede einzelne Kochzone eines Kochfeldes gegeben. Dadurch kann bei Überschreitung eines voreingestellten Schwellwertes für die Temperatur das gesamte Kochfeld oder auch nur der betreffende Heizkörper, von dem eine potentielle Gefahr ausgeht, selektiv abgeschaltet werden.

Dadurch können viele Küchenbrände bereits im Entstehungsprozess erkannt und vermieden werden.

Die Genauigkeit einer Infrarot-Temperaturmessung wird jedoch wesentlich durch den Emissionsgrad des auszumessenden Gegenstands oder Messobjekts beeinflusst. Ein Problem bei Infrarot-Messungen an Kochfeldern ist dabei die Vielfalt der möglichen Messobjekte, was dazu führt, dass eine Kenntnis eines Emissionsgrads des jeweiligen Messobjekts nicht vorausgesetzt werden kann. Mögliche Messobjekte umfassen beispielsweise Gargeschirr (z.B. Töpfe und Pfannen, mit und ohne Deckel usw.) aus verschiedenen Materialien (Edelstahl, Email, Aluminium, Glas, usw) sowie auch das jeweilige Gargut (das zumeist wasser- und/oder fetthaltig ist). So liegen beispielsweise die Emissionsgrade von Wasser, Glas und Öl im Bereich von etwa 0,8 bis 1, wohingegen die Emissionsgrade von Edelstahl oder poliertem Aluminium bei weniger als 0,2 liegen. Würde die Temperaturmessung beispielsweise von einem konstanten Emissionsgrad von ca. 0,8 ausgehen, so würde bei einem Messobjekt aus Edelstahl die gemessene Temperatur weit unter der tatsächlichen Objekttemperatur liegen. Demnach würden Gefahren, die von überhitzten Edelstahlobjekten ausgehen möglicherweise nicht erkannt werden.

JP 2008215718 A offenbart eine Dunstabzugshaube mit der Funktion, das Auftreten von Feuer in einem Gasherd zu verhindern und Feuer früh und sicher zu erkennen. Diese Dunstabzugshaube, die an einem oberen Teil eines Gasherds angeordnet ist, umfasst einen UV-Flammensensor, der eine in dem Gasherd verwendete Flamme erfasst, einen IR-Flammensensor, der die durch Feuer erzeugte Flamme erfasst, und eine Steuereinrichtung, die eine vorgeschriebene Verarbeitung auf der Basis der von dem UV-Flammensensor und / oder dem IR-Flammensensor erfassten Informationen durchführt.

DE 10 2008 041 390 A1 offenbart eine Kochfeldvorrichtung mit einer Überwachungseinheit zur Überwachung zumindest eines Kochbereichs eines Kochfelds, die zumindest eine Sensoreinheit aufweist, welche zu einer Erfassung in einem Infrarotbereich vorgesehen ist. Um geringe Herstellungskosten und eine platzsparende Ausgestaltung zu erreichen, wird vorgeschlagen, dass die Sensoreinheit eine Mehrzahl von Infrarotsensoren aufweist, die in einem Sensorfeld angeordnet sind.

Es ist die **Aufgabe** der vorliegenden Erfindung, die Nachteile des Standes der Technik zumindest teilweise zu überwinden und insbesondere eine verbesserte Kochfeldüberwachung bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Überwachungsvorrichtung für ein Kochfeld, aufweisend einen ersten Infrarotsensor zur Infrarotmessung des Kochfelds in einem ersten Spektralbereich oder Wellenlängenintervall. Die Überwachungsvorrichtung kann diesbezüglich analog zu der WO 2010/020541 A1 ausgestaltet sein.

Der erste Infrarotsensor kann beispielsweise ein Thermoelement aufweisen. Das Thermoelement kann insbesondere als eine Thermosäule oder "Thermopile" vorliegen.

Die Überwachungsvorrichtung kann vorzugsweise (direkt oder schräg) oberhalb des zu überwachenden Kochfelds angeordnet sein. Das Kochfeld kann vorzugsweise vollständig in einem Blickfeld des Infrarotsensors liegen.

Die Überwachungsvorrichtung weist ferner mindestens einen zweiten Infrarotsensor zur Infrarotmessung des Kochfelds in einem zweiten Spektralbereich oder Wellenlängenintervall auf, wobei die Spektralbereiche zumindest teilweise unterschiedlich sind. Die Spektralbereiche sind für eine besonders genaue Auflösung vorzugsweise disjunkt und überlappen sich nicht. Dadurch kann eine Genauigkeit einer Temperaturmessung verbessert werden und zudem eine Zahl von Fehlalarmen reduziert werden.

Der mindestens eine zweite Infrarotsensor kann in einer Weiterbildung einen einzigen (Einzel-)Sensor aufweisen, z.B. eine Thermosäule. Es wird für eine ortsaufgelöste Infrarotmessung jedoch bevorzugt, dass mindestens ein zweiter Infrarotsensor ein Feld aus, insbesondere identisch aufgebauten, Einzelsensoren aufweist. Ein solcher zweiter Infrarotsensor kann beispielsweise als eine Infrarotkamera oder als ein Feld aus Thermoelementen, insbesondere Thermosäulen, aufgebaut sein.

Mehrere (z.B. zwei, drei, vier oder noch mehr) zweite Infrarotsensoren (mit jeweils unterschiedlichen Spektralbereichen) können in einem gemeinsamen Gehäuse untergebracht sein, insbesondere falls jeder zweite Infrarotsensor nur einen Einzelsensor, insbesondere eine Thermosäule, aufweist. Jedoch ist auch eine räumlich getrennte Aufstellung der Infrarotsensoren möglich, beispielsweise um Abschattungseffekte zu vermeiden.

Der erste Infrarotsensor und der mindestens eine zweite Infrarotsensor können zudem in einem einzigen Sensor integriert sein. In anderen Worten umfasst die Erfindung auch eine Überwachungsvorrichtung für ein Kochfeld, aufweisend einen Infrarotsensor zur Infrarotmessung des Kochfelds in einem ersten Spektralbereich oder Wellenlängenintervall und in mindestens einem zweiten Spektralbereich, insbesondere falls Signale aus unterschiedlichen Spektralbereichen unterscheidbar sind. Ein solcher Infrarotsensor kann auch als ein funktionaler Mehrfach-Infrarotsensor angesehen werden.

Ferner sind der erste Infrarotsensor und der zweite Infrarotsensor zur ortsaufgelösten Infrarotmessung eingerichtet. Dadurch wird eine besonders genaue, insbesondere kochstellenspezifische Infrarotmessung ermöglicht. Der erste Infrarotsensor kann zur ortsaufgelösten Infrarotmessung beispielsweise ein Feld aus Einzelsensoren ("Sensorarray") aufweisen. Der erste Infrarotsensor kann beispielsweise als eine Infrarotkamera oder als ein Feld aus Thermoelementen aufgebaut sein.

Darüber hinaus weisen die Infrarotsensoren ein zumindest im Wesentlichen deckungsgleiches Blickfeld und ein zumindest im Wesentlichen deckungsgleiches Ortsauflösungsmuster auf. Dies ist zur ortsaufgelösten, insbesondere vergleichenden, Infrarot-Messung vorteilhaft.

Es ist eine zur erhöhten Genauigkeit einer Temperaturmessung bei unbekannten Emissionsgraden der Messobjekte bevorzugte Weiterbildung, dass die Überwachungsvorrichtung zur Durchführung einer sog. Mehrkanalpyrometrie eingerichtet ist, insbesondere zur Bestimmung einer Temperatur von auf dem Kochfeld abgestellten Gegenständen unabhängig von deren Emissionsgrad. Die Mehrkanalpyrometrie nutzt eine Korrelation von Temperaturmessungen aus unterschiedlichen Spektralbereichen, wodurch sich Temperaturen eines Gegenstands oder Messobjekts unabhängig von dessen Emissionsgrad bestimmen lassen. Dadurch kann beispielsweise sowohl eine Temperatur von Edelstahlkochgeschirr mit einem niedrigem Emissionsgrad als auch eine Temperatur von Glas(-keramik), Email oder auch Lebensmitteln mit einem hohem Emissionsgrad präzise bestimmt werden, und zwar auch ohne eine Vorkenntnis eines verwendeten Materials. Dies wiederum ermöglicht eine zusätzliche Absicherung einer Gefahrenerkennung, insbesondere eine sicherere Erkennung einer Überhitzung.

Es ist noch eine Ausgestaltung, dass zumindest einer der Infrarotsensoren einen Spektralbereich aufweist, welcher mindestens eine Absorptionslinie von Wasserdampf oder Rauch aufweist, und dass die Überwachungsvorrichtung dazu eingerichtet ist, aus einer schnellen (aber nicht abrupten) Signaländerung dieses Infrarotsensors auf eine Entwicklung oder ein Fehlen von Wasserdampf bzw. Rauch zu schließen. Dadurch kann leer kochendes Gargeschirr und/oder eine Rauchentwicklung erkannt werden.

Diese Ausgestaltung macht sich die Tatsache zu Nutze, dass Wasserdampf (z.B. bei im Bereich von 1450 nm, 1950nm und 2900 nm) und auch Rauch charakteristische Infrarot-Absorptionslinien oder Absorptionsbanden aufweisen. Umfasst ein Spektralbereich eines Infrarotsensors zumindest eine solche Infrarot-Absorptionslinie, wird sich z.B. bei einer Bildung von Wasserdampf das zugehörige Sensorsignal verringern, da Infrarotstrahlung durch den Wasserdampf absorbiert wird. Dies erlaubt beispielsweise eine Erkennung des Kochpunkts von Wasser durch ein Bestimmen eines schnellen (aber nicht abrupten) Signalabfalls.

Umgekehrt kann ein starker Anstieg des Sensorsignals in relativ kurzer Zeit (d.h. schnell) auf ein Fehlen von Wasserdampf nach einer zuvor erfolgten Entwicklung hindeuten. Dies wiederum kann auf einen leer kochenden Topf und damit auf eine entstehende Überhitzungsgefahr hindeuten. In diesem Falle kann beispielsweise eine Warnmeldung an den Benutzer ausgegeben werden.

Es ist eine zur Feststellung von Wasserdampf bzw. einem Fehlen davon bevorzugte Weiterbildung, dass ein Spektralbereich zumindest eines Infrarotsensors eine Wellenlänge im Bereich von 1450 nm, 1950nm und/oder 2900 nm umfasst.

Diese Ausgestaltung bzw. dieses Vorgehen kann bei Kenntnis charakteristischer Absorptionsbanden von Rauch, welcher insbesondere durch überhitztes Fett oder anbrennende Lebensmittel erzeugt werden kann, auch zur Erkennung einer entstehenden Brandgefahr verwendet werden.

Es ist noch eine zur Vermeidung von Fehlalarmen vorteilhafte Weiterbildung, dass eine Größe (Anstieg und/oder Abfall) der Signaländerung unterhalb oder oberhalb eines vorbestimmten Schwellwerts oder innerhalb eines vorbestimmten Bereichs liegt. So kann beispielsweise eine Verwechselung mit einer Entfernung von Gargeschirr von einer noch aktivierten Kochstelle, welche besonders schnell, nämlich abrupt durchgeführt wird, vermieden werden.

Es ist eine zur genauen Detektion einer Entwicklung oder eines Fehlens von Wasserdampf oder Rauch vorteilhafte Weiterbildung, dass eine Breite der mindestens einen Absorptionslinie von Wasserdampf oder Rauch umfassenden Spektralbereichs schmalbandig ist und insbesondere im Wesentlichen nur eine zu dieser Absorptionslinie gehörige Breite aufweist. Dies kann beispielsweise durch eine Wahl und Nutzung von geeigneten Infrarot-Filtern erreicht werden. Insbesondere können mehrere Infrarotsensoren mit unterschiedlichen Spektralbereichen auf unterschiedliche Gase (Wasserdampf, Rauchgase) anschlagen bzw. empfindlich reagieren. Dadurch können eine Detektionsgenauigkeit folglich unter anderem auch ein Überhitzungsschutz weiter verbessert werden.

Es ist eine weitere Ausgestaltung, dass zumindest einer der Infrarotsensoren einen Spektralbereich aufweist, welcher mindestens einen Transmissionsbereich einer Glaskeramik umfasst, und dass die Überwachungsvorrichtung dazu eingerichtet ist, aus einer für einen Heizkörper typischen Taktung des Sensorsignals dieses Infrarotsensors auf eine nicht abgedeckte Kochstelle zu schließen. Auch dies verbessert einen Überhitzungsschutz weiter.

Transmissionsbereiche von Glaskeramik liegen insbesondere zwischen ca. 0,7 Mikrometern und 2,8 Mikrometern als auch bei ca. 3,7 Mikrometern. Ein dort empfindlicher Infrarotsensor kann folglich bei Draufsicht auf ein durch eine Glaskeramikplatte abgedecktes Kochfeld einen unter der Glaskeramikplatte befindlichen Heizkörper direkt erfassen oder überwachen. Der Infrarotsensor wird dabei durch die Bandpassfilterwirkung der Glaskeramik nur wenig beeinflusst. Typischerweise ist jeder Kochstelle des Kochfelds mindestens ein Heizkörper zugeordnet. Die Temperatur eines stromdurchflossenen Heizkörpers beträgt typischerweise circa 1000°C. Ein zum Betreiben des Heizkörpers typisches Taktverhalten des Heizkörpers kann folglich anhand von stark ausgeprägten Temperaturänderungen während taktbedingter Aufheiz- und Abkühlphasen direkt beobachtet werden. Bei einem sachgemäßen Betrieb des Kochfeldes sind Kochstellen üblicherweise mit Kochgeschirr abgedeckt. Die Abwesenheit der für einen Heizkörper typischen Taktung bzw. Taktverhaltens auch im Sensorsignal des entsprechenden Infrarotsensors deutet demnach auf eine Abdeckung der jeweiligen Kochstelle hin. Im Umkehrschluss deutet eine Anwesenheit der Taktung bzw. des Taktverhaltens in dem Sensorsignal auf eine aktivierte, aber nicht abgedeckte (leer laufende) Kochstelle hin. Somit kann eine Topferkennung realisiert werden.

Durch eine Implementierung der Topferkennung lassen sich bei einer ortsaufgelösten Infrarot-Detektion einzelne Kochstellen oder das ganze Kochfeld automatisch abschalten, sobald Gargeschirr durch den Benutzer von einer Kochstelle entfernt wurde. Durch die damit einhergehende Vermeidung von leer laufenden Kochstellen kann elektrische Energie eingespart werden, was in Zeiten steigender Stromkosten einen besonderen Vorteil darstellt. Ferner ist eine automatische Topferkennung in Kochfeldern auch als ein Überhitzungsschutz zur Verhinderung potentieller Küchenbrände bereits im Entstehungsprozess einsetzbar. Ebenso können Gefahren durch ein unbeabsichtigtes Einschalten des Kochfeldes, ohne dass ein Kochprozess folgt, vorgebeugt werden. Derartige Situationen sind aus dem Alltagsgebrauch von Kochfeldern bekannt (z.B. aufgrund einer Ablenkung des Benutzers durch ein Telefonat, Ablenkung durch Kinder, usw.). Ebenso kann das Gefahrenpotential von Kochfeldern für ältere und/oder gebrechliche, insbesondere an Demenz erkrankte, Personen durch eine Topferkennung deutlich reduziert werden, da ein unbeabsichtigtes Einschalten nun nicht mehr möglich ist. Besonders diesen Personen kann durch eine derartige Sicherheitsfunktion ein längerer, selbstbestimmter Aufenthalt in ihrer gewohnten Lebensumgebung ermöglicht werden.

Es ist eine zur Vermeidung von nicht abgedeckten Kochstellen vorteilhafte Weiterbildung, dass die Überwachungsvorrichtung dazu ausgebildet ist, ein Feststellen einer nicht abgedeckten Kochstelle beispielsweise davon abhängig zu machen, ob eine abgefühlte Temperatur bzw. ein zugehöriges Sensorsignal zumindest zeitweise, insbesondere regelmäßig, oberhalb eines vorbestimmten Schwellwerts liegt. Dabei kann ausgenutzt werden, dass der Heizkörper typischerweise stoßweise bis auf 1000°C aufgeheizt wird und eine zugehörige Kochstelle immer noch auf typischerweise ca. 500°C aufgeheizt wird, während Gargut und Rauch oder Wasserdampf erheblich niedrigere Spitzentemperaturen aufweisen.

Es ist noch eine zur Vermeidung von Fehlalarmen vorteilhafte Weiterbildung, dass eine Größe (Anstieg und/oder Abfall) der Signaländerung innerhalb eines vorbestimmten Schwellwerts oder Bereichs liegt. So kann beispielsweise eine Verwechselung mit einer Entfernung von Gargeschirr von einer noch aktivierten Kochstelle, welche besonders schnell, nämlich abrupt durchgeführt wird, vermieden werden.

Es ist auch eine Ausgestaltung, dass die Überwachungsvorrichtung mindestens eine Infrarotlichtquelle aufweist, die zur Ausstrahlung von Infrarotlicht in Richtung des Kochfelds eingerichtet und angeordnet ist. Dies ermöglicht eine noch weiter verbesserte Genauigkeit einer Temperaturmessung.

Es ist eine Weiterbildung, dass die Ausstrahlung des Infrarotlichts für eine Materialerkennung, insbesondere von auf dem Kochfeld befindlichen Materialien, verwendet wird. Dabei kann insbesondere eine Kenntnis eines charakteristischen, wellenlängenabhängigen Reflexionsverhaltens der zu erkennenden Materialien, vorausgesetzt werden. Es kann insbesondere ausgenutzt werden, dass verschiedene Materialien (z.B. Glas, Edelstahl, Wasser, ...) in ihrem Reflexionsverhalten ausgeprägte Maxima und/oder Minima bei unterschiedlichen Wellenlängen aufweisen. Folglich kann anhand des Reflexionsverhaltens eine Identifizierung der Materialien anhand der beobachteten Maxima und/oder Minima erfolgen. Die Infrarotsensoren können dazu insbesondere Spektralbereiche aufweisen, welche Maxima und/oder Minima zumindest der gängigsten Materialien von Gargeschirr und/oder Gargut diskriminieren können. So kann ein auszumessender Gegenstand Infrarotlicht einer ersten Wellenlänge, auf welche z.B. der erste Infrarotsensor empfindlich reagiert, hochgradig reflektieren und Infrarotlicht einer zweiten Wellenlänge, auf welche z.B. der zweite Infrarotsensor empfindlich reagiert, erheblich schlechter reflektieren. Wird dieser Gegenstand durch den ersten Infrarotsensor gut erkannt und durch den zweiten Infrarotsensor nicht oder nur schlecht erkannt, so kann auf ein Material rückgeschlossen werden, das bei der ersten Wellenlänge ein Reflexionsmaximum aufweist und/oder bei der zweiten Wellenlänge ein Reflexionsminimum aufweist. Ein solches Material kann aus einer Tabelle oder Liste nachgeschlagen und folglich identifiziert werden.

Es ist noch eine Ausgestaltung, dass die Infrarotlichtquelle eine breitbandige Infrarotlichtquelle ist, deren Infrarotlicht die Spektralbereiche mindestens zweier Infrarotsensoren umfasst. Dadurch kann auf eine einfache Weise eine starke Reflexion am Kochfeld und darauf abgestellten Objekten und folglich gut auflösbare Sensorsignale erzeugt werden. Es ist also außerdem eine Ausgestaltung, dass die Überwachungsvorrichtung dazu ausgestaltet ist, das Kochfeld (und damit auch auf dem Kochfeld angeordnete Gegenstände) mittels der breitbandigen Infrarotlichtquelle zu bestrahlen, von mindestens einem auf dem Kochfeld befindlichen Gegenstand zurückreflektiertes Infrarotlicht unterschiedlicher Spektralbereiche zu erfassen und aus dem zurückreflektierten Infrarotlicht ein Material des mindestens einen auf dem Kochfeld angeordneten Gegenstands zu bestimmen.

Es ist eine Weiterbildung, dass aus der Kenntnis des Materials ein zugehöriger Emissionsgrad bestimmt wird (z.B. durch Nachschlagen in einer Tabelle oder einem Speicher). Aus der Kenntnis des Emissionsgrads wiederum kann eine davon im Wesentlichen unabhängige bzw. eine um einen Einfluss des Emissionsgrads korrigierte Temperaturmessung dieses Gegenstands durchgeführt werden.

Alternativ können beispielsweise mehrere schmalbandigere Infrarotlichtquellen eingesetzt werden.

Die Beleuchtung kann kontinuierlich oder aber auch gepulst erfolgen.

Es ist noch eine Ausgestaltung oder eine eigenständige Lösung der Aufgabe, dass die bzw. eine Überwachungsvorrichtung mindestens einen Gassensor aufweist, welcher selektiv auf mindestens ein küchentypisches gasförmiges Erwärmungsprodukt anschlägt. So kann ein Überhitzungsschutz auch für den Fall bereitgestellt werden, dass eine Wärmequelle (z.B. eine Kochstelle) von einem schlecht wärmeleitenden Material (z.B. Papier oder Kunststoff) überdeckt ist. Insbesondere können so auch Schwelbrände erkannt werden.

Die Überwachungsvorrichtung mag auch mindestens einen Gassensor aufweist, welcher auf typische Brandgase reagiert, wie CO, CO₂, NH₃, H₂, NO, NO₂ oder CH₄. Diese sind immer in Brandentstehungsprozessen nachzuweisen und technisch gesehen leicht selektiv zu detektieren.

Der mindestens eine Gassensor kann einen oder mehrere Gassensoren aufweisen ("Gassensor-Array"), wobei mehrere Gassensoren insbesondere auf unterschiedliche Gase selektiv ansprechen können. Insbesondere der Einsatz eines Gassensor-Arrays erlaubt Rückschlüsse auf eine tatsächlich vorliegende Überhitzungsgefahr ("Elektronische Nase").

Ein küchentypisches gasförmiges Erwärmungsprodukt kann insbesondere mindestens ein gasförmiges Erwärmungsprodukt von Gargut sein. Es ist folglich eine Ausgestaltung, dass mindestens ein Gassensor selektiv auf mindestens ein gasförmiges Erwärmungsprodukt von Gargut anschlägt. Dadurch kann eine Überhitzung von Lebensmitteln, insbesondere von Fetten wie Speiseöl, frühzeitig erkannt werden. Es kann folgend mindestens eine Aktion, z.B. ein Ausschalten des Kochfelds, ein Aktivieren einer Raumlüftung und/oder eine Ausgabe eines Warnsignals, ausgelöst werden.

Für den Fall, dass das gasförmige Erwärmungsprodukt auch bei einem normalen Wärmebehandlungsvorgang des Garguts auftritt, mag der Gassensor insbesondere nur dann anschlagen oder ein Signal ausgeben, wenn eine Konzentration des mindestens einen gasförmigen Erwärmungsprodukts am Ort des Gassensors einen vorbestimmten zugehörigen Schwellwert überschreitet. Allgemein kann eine Erkennung jedoch auch auf der Grundlage eines Mustererkennungsverfahrens (z.B. eine Hauptkomponentenanalyse) durchgeführt werden. Hierbei können die Signale mehrerer Gassensoren kombiniert ausgewertet und gefährliche Situationen anhand eines charakteristischen Signalmusters ("Fingerabdruck") erkannt werden. Alternativ oder zusätzlich mag der mindestens eine Gassensor auf Erwärmungsprodukte von Lebensmitteln ansprechen, welche nur bei einer Verkohlung oder Verbrennung von Gargut auftreten.

Garguttypische gasförmige Erwärmungsprodukte, auf die ein solcher Gassensor hin ausgelegt sein kann, können insbesondere Aldehyde, Ketone, Alkohole, freie Fettsäuren, (un-) gesättigte Kohlenwasserstoffe und VOCs ("Volatile Organic Compounds") umfassen. Es handelt sich dabei hauptsächlich um Reaktionsprodukte der Maillard-Reaktion (Bräunungsreaktion) sowie um Umwandlungsprodukte aus überhitzten Fetten. Ein Gassensor-Array kann auf eines der Erwärmungsprodukte oder auf eine Kombination aus mehreren der Erwärmungsprodukte empfindlich sein ("Gassensor-Array").

Der mindestens eine Gassensor kann insbesondere mindestens einen Metalloxid ("MOX"-) Gassensor und/oder mindestens einen Gassensor, welcher auf einem Einsatz eines Transistors mit einem gassensitiven Gate basieren ("FET-)Gassensor, umfassen. Diese liefern ein temperatur- und feuchtekompensiertes Signal, welches in einer Auswerteschaltung (üblicherweise ein Mikrocontroller) interpretiert wird. Ein Einsatz derartiger robuster Sensoren in Küchen, wo oftmals mit erhöhter Luftfeuchtigkeit und Verschmutzung zu rechnen ist, ist besonders vorteilhaft.

Insbesondere eignet sich ein Einbau des mindestens einen Gassensors über oder neben dem Kochfeld. Eine besonders vorteilhafte Lösung ist ein Einbau des Gassensors in eine Dunstabzugshaube oder Esse.

Außer Erwärmungsprodukten von Gargut können auch andere Erwärmungsprodukte (Schwelgase und/oder Brandgase), welche durch einen Betrieb des Kochfelds erzeugt werden, detektiert werden. Beispielsweise wird durch beengte Platzverhältnisse in Küchen das Kochfeld oftmals produktwidrig als eine zusätzliche Ablagefläche für Gegenstände aller Art verwendet. Dies kann z.B. das Abstellen von Einkaufstaschen, Schneidbrettern, (Küchen-)Papier, usw. einschließen. Gefahren, die durch ein derartiges Abstellen von Gegenständen verursacht werden, können mittels einer Kochfeldüberwachung durch eine Infrarot-Temperaturmessung in ungünstigen Fällen nicht rechtzeitig erkannt werden, falls die Wärmequelle (z.B. ein Heizkörper bzw. eine Kochstelle des Kochfeldes) teilweise oder vollständig abgedeckt ist. Ein Gassensor jedoch erlaubt die sichere Erkennung derartiger Gefahren. Beispielsweise entsteht an einem auf einem eingeschalteten Heizkörper oder Kochstelle abgelegten Schneidbrett aus Holz oder Kunststoff zunächst ein Schmorbrand, dessen typische Gase durch mindestens einen Gassensor erkannt werden können. Folgend kann mindestens eine Aktion ausgelöst werden, z.B. das Kochfeld, ggf. nach oder mit der Ausgabe einer Warnung, abgeschaltet werden. So kann ein offener Brand verhindert werden.

Zusätzlich oder alternativ zur der Funktion der Brandfrüherkennung kann durch einen Gassensor auch eine Raumluftüberwachung realisiert werden. Bei Überschreitung eines Schwellwertes in der Konzentration charakteristischer Gase (z.B. von Erwärmungsprodukten), welche ein übliches Raumklima überlagern, kann ein Hinweis auf eine Aktivierung einer Raumlüftung ausgeben werden. Die Raumlüftung kann z.B. ein Bestandteil eines automatisierten Raumlüftungskonzepts (z.B. in Passivhäusern mit Wärmerückgewinnung) sein und z.B. Gebläse, Lüfterklappen usw. umfassen. Insbesondere kann auch eine Dunstabzugshaube zum Austausch der Raumluft verwendet werden.

Im Falle einer Gefahr durch toxische Gase kann, z.B. von der Überwachungsvorrichtung, eine Warnung ausgegeben, bei deren Nichtbeachtung automatisch ein Notruf abgesetzt wird. Diese Funktion ist besonders vorteilhaft bei älteren oder an Demenz erkrankten Menschen, die alleine Zuhause leben. Die automatische Verständigung von Angehörigen oder auch von Pflegepersonal ist dabei denkbar.

Die Aufgabe wird auch gelöst durch ein Verfahren zum Überwachen eines Kochfelds, wobei zumindest ein Teil des Kochfelds mittels einer ortsaufgelösten Infrarotmessung in einem ersten Spektralbereich und in einem zweiten Spektralbereich aus einer Position , oberhalb des zu überwachenden Kochfelds überwacht wird und wobei zumindest ein Teil des Kochfelds mittels einer ortsaufge-lösten Infrarotmessung mit zumindest im Wesentlichen deckungsgleichen Blickfeldern und mit zumindest im Wesentlichen deckungsgleichen Ortsauflösungsmustern in dem ersten Spektralbereich und in dem zweiten Spektralbereich überwacht wird.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.1: zeigt als Schnittdarstellung in Seitenansicht ein Haushaltsgerätesystem mit einem Kochfeld und einer dem Kochfeld zugeordneten Überwachungsvorrichtung;
- Fig.2: zeigt das Kochfeld in Draufsicht mit einer von der Überwachungsvorrichtung erzeugten Rasterung;
- Fig.3: zeigt das Haushaltsgerätesystem aus Fig.1 mit einer aktivierten breitbandigen Infrarotlichtquelle;
- Fig.4: zeigt eine Auftragung eines Reflexionslichtstroms gegen eine Wellenlänge für zwei unterschiedliche, von der breitbandigen Infrarotlichtquelle bestrahlte Materialien; und
- Fig.5: zeigt das Haushaltsgerätesystem aus Fig.1 mit einer abgedeckten und einer nicht abgedeckten aktivierten Kochstelle.

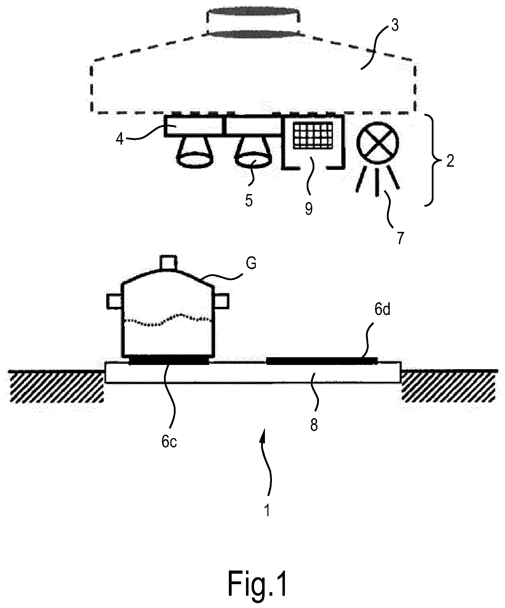

**Fig.1** zeigt als Schnittdarstellung in Seitenansicht ein Haushaltsgerätesystem 1, 2 mit einem Kochfeld 1 und einer dem Kochfeld 1 zugeordneten Überwachungsvorrichtung 2. Die Überwachungsvorrichtung 2 dient insbesondere zur Überwachung des Kochfelds 1 und/oder darauf angeordneter Gegenstände auf eine Überhitzung o.ä.

Die Überwachungsvorrichtung 2 ist (direkt oder schräg) oberhalb des Kochfelds 1 an einer Dunstabzugshaube 3 angeordnet. Die Überwachungsvorrichtung 2 kann insbesondere in die Dunstabzugshaube 3 integriert sein, mag aber alternativ z.B. auch autark aufgestellt sein.

Die Überwachungsvorrichtung 2 weist einen ersten Infrarotsensor 4 zur ortsaufgelösten Infrarotmessung des Kochfelds (und darauf angeordneter Gegenstände) in einem ersten Spektralbereich S1 auf. Dieser erste Infrarotsensor 4 kann insbesondere analog zu der WO 2010/020541 A1 ausgestaltet sein. Der Infrarotsensor 4 ist hier als ein Sensorfeld aus mehreren Thermosäulen aufgebaut, kann aber grundsätzlich z.B. auch ein Feld aus anderen Thermoelementen aufweisen oder als eine Infrarotkamera ausgestaltet sein.

Die Überwachungsvorrichtung 2 weist ferner mindestens einen zweiten Infrarotsensor 5 zur ortsaufgelösten Infrarotmessung des Kochfelds 1 in einem jeweiligen zweiten Spektralbereich S2 auf. Der erste Spektralbereich S1 und der zweite Spektralbereich S2 sind disjunkt, d.h., dass sie sich nicht überlappen. Insbesondere kann der erste Spektralbereich S1 um eine erste Wellenlänge λ1 herum zentriert sein (S1 = S1(λ1)) und der zweite Spektralbereich S2 um eine jeweilige zweite Wellenlänge λ2 herum zentriert sein (S2 = S2(λ2)). Der zweite Infrarotsensor 5 mag einen nicht-ortsauflösenden Einzelsensor, insbesondere eine Thermosäule, aufweisen, ist aber hier beispielhaft als ein Sensorfeld, insbesondere aus Thermosäulen, aufgebaut. Es ist insbesondere möglich, dass mehrere zweite Infrarotsensoren 5 mit unterschiedlichen zweiten Spektralbereichen S2(λ2a), S2(λ2b) usw. vorhanden sind, insbesondere um unterschiedliche Überwachungsfunktionen durchführen zu können.

Der mindestens eine zweite Infrarotsensor 5 kann insbesondere im Wesentlichen gleich zu dem ersten Infrarotsensor 4 aufgebaut sein, insbesondere im Hinblick auf eine Rasterung oder Ortsauflösung. Insbesondere können sich der erste Infrarotsensor 4 und der zweite Infrarotsensor 5 im Wesentlichen nur durch ein dem jeweiligen Sensorfeld vorgeschaltetes Infrarot-Filter unterscheiden, wobei das Filter den jeweils durchgelassenen Spektralbereich S1, S2 festlegt.

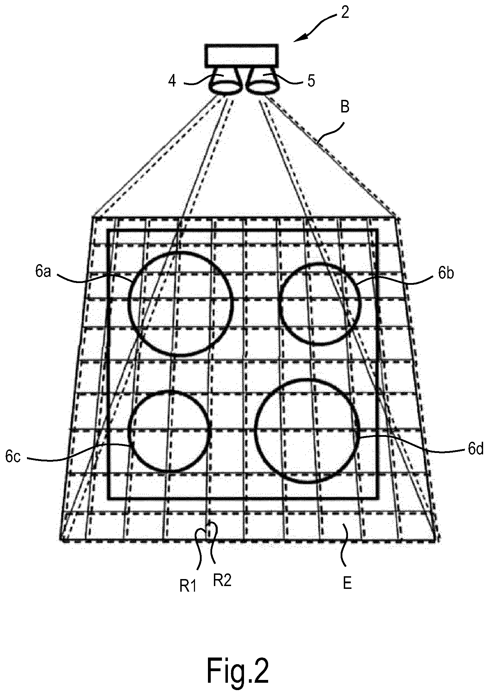

**Fig.2** zeigt das Kochfeld 1 in Draufsicht mit einer von der Überwachungsvorrichtung 2 erzeugten oder verwendeten Rasterung R1 bzw. R2 eines im Wesentlichen deckungsgleichen Blickfelds B des ersten Infrarotsensors 4 und des zweiten Infrarotsensors 5. Die Rasterung R1 für den ersten Infrarotsensor 4 ist durchgängig eingezeichnet, die Rasterung R2 für den zweiten Infrarotsensors 5 ist gestrichelt eingezeichnet. Die Rasterungen R1, R2 definieren eine Ortsauflösung des jeweiligen Infrarotsensors 4, 5, wobei ein Rasterelement E einem Bildpunkt des Infrarotsensors 4, 5 entspricht und beispielsweise durch eine eindeutig zugeordnete Thermosäule abgefühlt wird.

Die Rasterungen R1, R2 sind hier für die Infrarotsensoren 4, 5 zumindest im Wesentlichen übereinstimmend, so dass ortsaufgelöste Sensorsignale der Infrarotsensoren 4, 5 besonders einfach korrelierbar sind. Jede der Rasterungen R1, R2 weist beispielhaft 10x10 = 100 in einer quadratischen Matrixanordnung angeordnete Rasterelemente E und folglich ebenso viele Thermosäulen auf. Die Infrarotsensoren 4,5 sind so eingestellt und angeordnet, dass von den jeweils einhundert Rasterelementen E neunzig das Kochfeld 1 bedecken. Das Kochfeld 1 ist folglich ganzflächig durch Rasterelemente E bedeckt und überwachbar.

Das Kochfeld 1 weist hier vier Kochstellen 6a, 6b, 6c und 6d auf, welche eine unterschiedliche Größe und/oder Form aufweisen können und jeweils durch mehrere Rasterelemente E bedeckt sind.

Durch die Überwachungsvorrichtung 2 wird folglich eine bildpunktartige ortsaufgelöste Infrarot- oder Temperaturmessung des Kochfelds 1 (und damit auch der Kochstellen 6a-d) ermöglicht, und zwar in unterschiedlichen Spektralbändern S1, S2. Dies ermöglicht insbesondere eine Ausgestaltung der Überwachungsvorrichtung 2 zur Durchführung einer ortsaufgelösten Mehrkanalpyrometrie zur Bestimmung eines Emissionsgrads von auf dem Kochfeld 1 (und damit auch auf den Kochstellen 6a-d) abgestellten Gegenständen. Ein solcher Gegenstand ist in Fig.1 beispielhaft anhand eines auf der Kochstelle 6c abgestellten Gargeschirr in Form eines Topfs G eingezeichnet.

Mittels der ortsaufgelösten Mehrkanalpyrometrie, welche eine Korrelation von Temperaturmessungen von mindestens zwei Infrarotsensoren 4, 5 durchführt, lässt sich eine Temperatur des Topfs G unabhängig von dessen Emissionsgrad bestimmen. Dies wiederum ermöglicht eine zusätzliche Absicherung einer Gefahrenerkennung, insbesondere eine sicherere Erkennung einer Überhitzung des Topfs G. Zur ortsaufgelösten Mehrkanalpyrometrie können dazu insbesondere nur (deckungsgleiche) Rasterelemente E der Rasterungen R1 und R2 verwendet werden, welche die Kochstelle 6c überdecken. So kann ein thermisches Übersprechen von benachbarten Kochstellen 6a, 6b, 6d bzw. von darauf abgestellten Gegenständen unterdrückt oder verhindert werden. Die Funktionsweise der Mehrkanalpyrometrie ist grundsätzlich gut bekannt und braucht hier nicht weiter ausgeführt zu werden.

Zumindest einer der Infrarotsensoren 4, 5 (hier beispielhaft der zweite Infrarotsensor 5) kann einen Spektralbereich S2 aufweisen, welcher mindestens eine Absorptionslinie von Wasserdampf umfasst. So kann der zweite Spektralbereich S2 z.B. ein Wellenlänge von ca. 1450 nm, 1950 nm und/oder 2900 nm umfassen, insbesondere schmalbandig darum zentriert sein. Dieser zweite Infrarotsensor 5 kann der gleiche zweite Infrarotsensor 5 sein wie er für die Durchführung der Mehrkanalpyrometrie verwendet wird, oder er kann ein zusätzlicher oder alternativer zweiter Infrarotsensor 5 sein.

Die Überwachungsvorrichtung 2 ist ferner dazu eingerichtet, aus einer schnellen Signaländerung dieses zweiten Infrarotsensors 5 auf eine Entwicklung oder ein Fehlen von Wasserdampf zu schließen. Die Überwachungsvorrichtung 2 reagiert diesbezüglich auf eine Signaländerung, die so schnell ist, wie eine typische Entwicklung von Wasserdampf oder ein Leerkochen dauert. Dabei wird ausgenutzt, dass Wasserdampf typischerweise von einem Gargerät, hier: dem Topf G, aufsteigt und sich zwischen den Topf G und den zweiten Infrarotsensor 5 legt. Dadurch, dass Wasserdampf Infrarotlicht im Bereich von 1450 nm, 1950 nm und 2900 nm absorbiert, verringert sich das Sensorsignal an dem zweiten Infrarotsensor 5 bei einer Anwesenheit von Wasserdampf und steigt bei einem Fehlen von Wasserdampf wieder an. Diese Signaländerung kann festgestellt werden und insbesondere mit mindestens einer Aktion verknüpft werden, z.B. mit einer Ausgabe eines optischen und/oder akustischen Warnsignals oder ein Abschalten der Kochstelle 6c.

Die Überwachungsvorrichtung 2 weist ferner mindestens einen Gassensor 9 insbesondere zur Detektion küchentypischer gasförmiger Erwärmungsprodukte und/oder von Brandgasen auf. Der Gassensor 9 kann insbesondere wie eingangs beschrieben ausgestaltet sein.

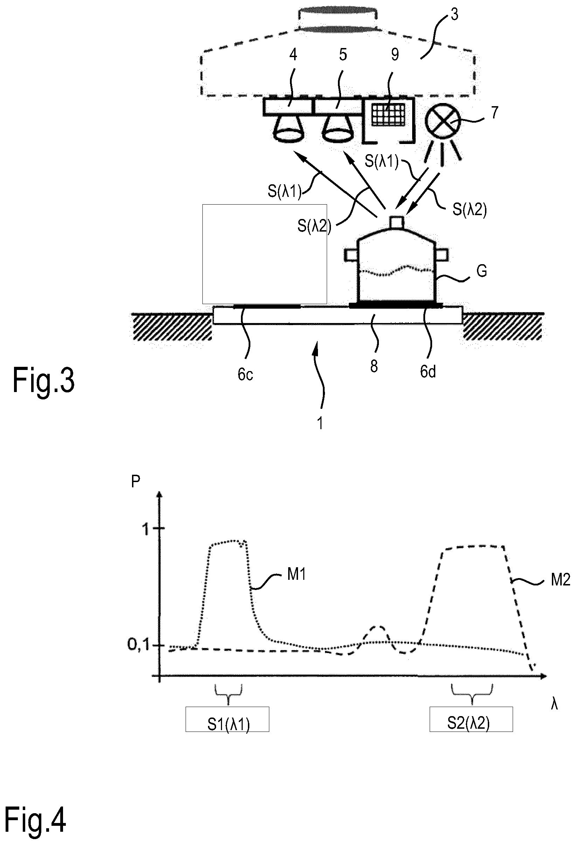

**Fig.3** zeigt das Haushaltsgerätesystem 1, 2 aus Fig.1 mit einer aktivierten breitbandigen Infrarotlichtquelle 7. Die Infrarotlichtquelle 7 weist ein Infrarot-Emissionsspektrum auf, welches den ersten Spektralbereich S1(λ1) und den zweiten Spektralbereich S2(λ2) abdeckt oder umfasst. Das von der aktivierten Infrarotlichtquelle 7 abgestrahlte Infrarotlicht wird an dem Topf G reflektiert und fällt in die Infrarotsensoren 4, 5, wie durch die Pfeile angedeutet.

Mittels der Bestrahlung durch die Infrarotlichtquelle 7 kann ein für die Infrarotsensoren 4, 5 sichtbares Material eines für auf dem Kochfeld 1 befindlichen Gegenstands bestimmt werden. Diese Kenntnis wiederum kann zur Bestimmung des Emissionsgrads des Materials und/oder zur Bestimmung einer Temperatur von auf dem Kochfeld abgestellten Gegenständen unabhängig von deren Emissionsgrad verwendet werden, und zwar zusätzlich zu oder alternativ zu der Mehrkanalpyrometrie.

Dabei wird, wie in **Fig.4** angedeutet, ausgenutzt, dass verschiedene Materialien Reflexionsminima und/oder Reflexionsmaxima bei unterschiedlichen Wellenlängenbereichen aufweisen. Sind diese Reflexionsminima und/oder Reflexionsmaxima bekannt, kann ein Reflexionslichtstrom o.ä. in den Spektralbereichen S1, S2 der Infrarotsensoren 4 bzw. 5 für verschiedene Gegenstände auf dem Kochfeld 1, z.B. für den Topf G, festgestellt werden.

Fig.4 zeigt dazu beispielhaft eine Auftragung eines von dem Topf G in die Infrarotsensoren 4, 5 reflektierten Reflexionslichtstroms P gegen eine Wellenlänge λ für zwei unterschiedliche Materialien M1 (z.B. Edelstahl) und M2 (z.B. Glas). Der Reflexionslichtstrom P ist hier als ein relativer Wert aufgetragen, welcher in Bezug auf einen zugehörigen Emissions-Lichtstrom der Infrarotlichtquelle 7 normiert ist.

Denn je nachdem, ob die Reflexion für den jeweiligen Spektralbereich S1, S2 stark oder schwach ist, ist das Sensorsignal für den Topf G an den Infrarotsensoren 4 bzw. 5 stärker oder schwächer, und es kann auf ein Reflexionsminimum und/oder auf ein Reflexionsmaximum in den zugehörigen Spektralbereichen S1, S2 geschlossen werden. In Fig.4 weist beispielsweise das Material M1 ein Reflexionsmaximum (einen hohen Reflexionsgrad) für den ersten Spektralbereich S1(λ1) und ein Reflexionsminimum oder zumindest kein Reflexionsmaximum (einen niedrigen Reflexionsgrad) für den zweiten Spektralbereich S2(λ2) auf. Umgekehrt weist das Material M2 ein Reflexionsmaximum (einen hohen Reflexionsgrad) für den zweiten Spektralbereich S2(λ2) und ein Reflexionsminimum oder zumindest kein Reflexionsmaximum (einen niedrigen Reflexionsgrad) für den ersten Spektralbereich S1(λ1) auf. Ist also bekannt, dass das Material M1 in dem ersten Spektralbereich S1(λ1) hochgradig reflektiv ist und in dem zweiten Spektralbereich S2(λ2) erheblich weniger reflektiv ist, kann aus der Kurve für das Material M1 auf ein Vorliegen eben dieses Materials M1 geschlossen werden, z.B. durch ein Nachschlagen in einer Nachschlagetabelle einer Auswerteeinheit. Dies gilt analog für das Material M2. Aus der Bestimmung des Materials M1, M2 kann bei gleichzeitiger Kenntnis eines Emissionsgrads dieses Materials M1, M2 eine Temperatur des dieses Material M1, M2 aufweisenden Topfs G usw. unabhängig von dem Emissionsgrad und folglich genauer bestimmt werden.

Der Rückschluss auf das Material M1, M2 kann z.B. durch eine Betrachtung eines absoluten Signalpegels an den Infrarotsensoren 4, 5 und/oder durch eine Betrachtung eines Verhältnisses der Signalpegel der Infrarotsensoren 4, 5 erreicht werden.

Dieser zweite Infrarotsensor 5 kann insbesondere der gleiche zweite Infrarotsensor 5 sein wie er für die Durchführung der Mehrkanalpyrometrie und/oder für die Wasserdampferkennung usw. verwendet wird, oder er kann ein zusätzlicher oder alternativer zweiter Infrarotsensor 5 sein.

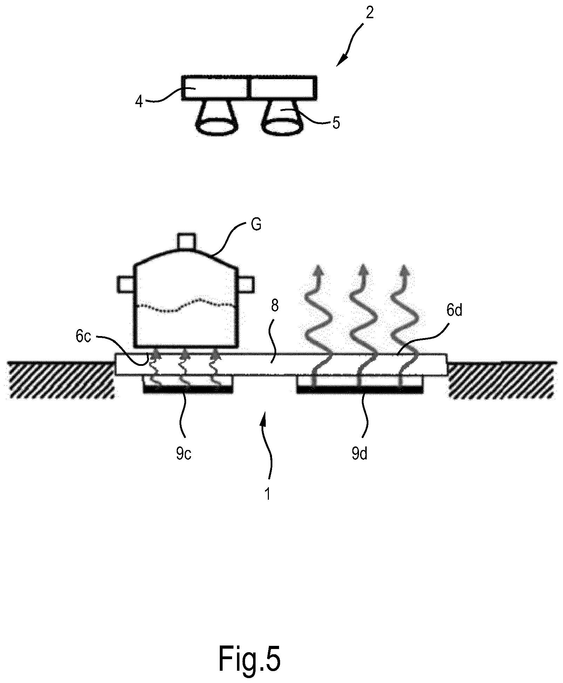

**Fig.5** zeigt das Haushaltsgerätesystem 1, 2 aus Fig.1 mit einer durch den Topf G abgedeckten Kochstelle 6c und einer nicht abgedeckten aktivierten Kochstelle 6d. Ein zweiter Infrarotsensor 5 weist nun einen Spektralbereich S2 auf, welcher einem Transmissionsbereich einer Glaskeramik 8 entspricht. Diese Glaskeramik 8 dient in Plattenform als Kochfeldabdeckung des Kochfelds 1. An den Kochstellen 6c und 6d befinden sich unterhalb der Glaskeramik 8 Heizkörper 9c und 9d, z.B. Widerstandsheizungen. Diese Heizkörper 9c und 9d heizen bei ihrer Aktivierung einen darüber befindlichen Bereich der Glaskeramik 8 auf, welcher wiederum den auf der Kochstelle 6c befindlichen Topf G erwärmt. Die Heizkörper 9c, 9d werden typischerweise getaktet betrieben, z.B. in einem Pulsbreitenbetrieb. Der Heizkörper 9c, 9d heizt sich dabei typischerweise auf bis zu 1000°C auf, wobei der darüber liegende Bereich der Glaskeramik 8 immer noch ca. 500°C heiß werden kann.

Dadurch, dass der Spektralbereich S2 mit einem Transmissionsbereich der Glaskeramik 8 übereinstimmt (z.B. mit einem Bereich zwischen ca. 0,7 Mikrometern und 2,8 Mikrometern oder auch bei ca. 3,7 Mikrometern), sind die Heizwiderstände der Heizkörper 9c, 9d für den zweiten Infrarotsensor 5 thermisch gut erkennbar.

Zur Erkennung der nicht abgedeckten Kochstelle 6d als eine solche und zur Erkennung der Kochstelle 6c als einer abgedeckten Kochstelle ist die Überwachungsvorrichtung 2 dazu eingerichtet, aus einem Vorhandensein einer für einen Heizkörper 9c, 9d typischen Taktung in einem Sensorsignal auf eine nicht abgedeckte Kochstelle 6d zu schließen. Denn die Taktung ist nur bei einer direkten Betrachtung der Heizkörper 9c, 9d erkennbar, deren getaktete Bestromung zu einem getakteten Temperaturverlauf führt, welcher wiederum ein getaktetes Sensorsignal des zweiten Infrarotsensors 5 erzeugt. Diese Taktung des Sensorsignals kann durch eine entsprechende Auswertung erkannt werden, beispielsweise durch eine Erkennung einer regelmäßig wiederkehrenden Signalspitze. Ist eine Taktung erkennbar, ist die überwachte Kochstelle 6d nicht abgedeckt. Umgekehrt kann auf eine abgedeckte Kochstelle 6c durch ein Fehlen einer Taktung geschlossen werden. Dabei kann eine Zuordnung auch von einer Erfüllung zusätzlicher Randbedingungen wie einer Höhe, einer Differenz und/oder einer Flankensteilheit der Signalspitzen des Sensorsignals abhängig sein.

Dieser zweite Infrarotsensor 5 kann insbesondere der gleiche zweite Infrarotsensor 5 sein wie er für die Durchführung der Mehrkanalpyrometrie und/oder für die Wasserdampferkennung usw. in Fig.1 und Fig.2 oder für die in Fig.3 und Fig.4 beispielhaft beschriebene Materialbestimmung verwendet wird, oder er kann noch ein zusätzlicher oder alternativer zweiter Infrarotsensor 5 sein.

Selbstverständlich ist die vorliegende Erfindung nicht auf die gezeigten Ausführungsbeispiele beschränkt.

Allgemein mag die Überwachungsvorrichtung eine Auswerteeinheit, z.B. einen Mikrocontroller, aufweisen oder mag mit einer Auswerteeinheit kommunikativ gekoppelt sein.

Allgemein kann auf eine der oben beschriebenen Messungen, Auswertungen, Bestimmungen usw. hin mindestens eine Aktion ausgelöst werden, insbesondere eine Aktion, die dabei hilft, eine Überhitzung zu verhindern oder zu beseitigen, insbesondere einen Brandausbruch zu verhindern.

Die Überwachungsvorrichtung kann allgemein in ein das Kochfeld aufweisendes Gargerät integriert sein. Die Überwachungsvorrichtung kann alternativ eine separate Vorrichtung sein.

### Bezugszeichenliste

- 1: Kochfeld
- 2: Überwachungsvorrichtung
- 3: Dunstabzugshaube
- 4: erster Infrarotsensor
- 5: zweiter Infrarotsensor
- 6a: Kochstelle
- 6b: Kochstelle
- 6c: Kochstelle
- 6d: Kochstelle
- 7: Infrarotlichtquelle
- 8: Glaskeramik
- 9: Gassensor
- 9c: Heizkörper
- 9d: Heizkörper
- B: Blickfeld
- E: Rasterelement
- G: Gargeschirr
- P: Reflexionslichtstrom
- M1: Material
- M2: Material
- R1: Rasterung
- R2: Rasterung
- S1: erster Spektralbereich
- S2: zweiter Spektralbereich
- Λ1: erste Wellenlänge
- Λ2: zweite Wellenlänge
- ΛT: Temperaturanstieg

## Patentansprüche

1. Haushaltsgerätesystem (1, 2) mit mindestens einem Kochfeld (1) und einer oberhalb des zu überwachenden Kochfelds (1) angeordneten Überwachungsvorrichtung (2), wobei
- die Überwachungsvorrichtung (2) einen ersten Infrarotsensor (4) zur Infrarotmessung des Kochfeldes (1) in einem ersten Spektralbereich (S1) und mindestens einen zweiten Infrarotsensor (5) zur Infrarotmessung des Kochfelds (1) in einem zweiten Spektralbereich (S2) aufweist und wobei
- die Spektralbereiche (S1, S2) unterschiedlich sind,
**dadurch gekennzeichnet, dass**
- der erste Infrarotsensor (4) und der zweite Infrarotsensor (5) jeweils zur ortsaufgelösten Infrarotmessung des Kochfelds (1) eingerichtet sind und dass
- die Infrarotsensoren (4, 5) ein zumindest im Wesentlichen deckungsgleiches Blickfeld (B) und ein zumindest im Wesentlichen deckungsgleiches Ortsauflösungsmuster (R1, R2) aufweisen.

2. Haushaltsgerätesystem (1, 2) nach Anspruch 1, **dadurch gekennzeichnet, dass** zumindest der erste Infrarotsensor (4) ein Feld aus Einzelsensoren aufweist.

3. Haushaltsgerätesystem (1, 2) nach einem der vorhergehenden Ansprüche, **dadurch gekennzeichnet, dass** die Überwachungsvorrichtung (2) zur Durchführung einer Mehrkanalpyrometrie zur Bestimmung einer Temperatur von auf dem Kochfeld (1) abgestellten Gegenständen (G) unabhängig von deren Emissionsgrad eingerichtet ist.

4. Haushaltsgerätesystem (1, 2) nach einem der vorhergehenden Ansprüche, **dadurch gekennzeichnet, dass**
- zumindest einer der Infrarotsensoren (5) einen Spektralbereich (S2) aufweist, welcher mindestens einen Transmissionsbereich einer Glaskeramik aufweist, und dass
- die Überwachungsvorrichtung (2) dazu eingerichtet ist, aus einem Vorhandensein einer für einen Heizkörper (9d) typischen Taktung in einem Sensorsignal dieses zumindest einen Infrarotsensors (5) auf eine nicht abgedeckte Kochstelle (6d) zu schließen, indem
- die Überwachungsvorrichtung (2) dazu ausgebildet ist, eine nicht abgedeckte Kochstelle (6d) dadurch festzustellen, dass eine abgefühlte Temperatur zumindest regelmäßig oberhalb eines vorbestimmten Schwellwerts liegt.

5. Haushaltsgerätesystem (1, 2) nach einem der vorhergehenden Ansprüche, **dadurch gekennzeichnet, dass**
- die Überwachungsvorrichtung (2) mindestens eine Infrarotlichtquelle (7) aufweist, die zur Ausstrahlung von Infrarotlicht in Richtung des Kochfelds (1) eingerichtet und angeordnet ist und dass
- die Infrarotlichtquelle (7) eine breitbandige Infrarotlichtquelle ist, deren Infrarotlicht die Spektralbereiche (S1, S2) mindestens zweier Infrarotsensoren (4, 5) umfasst.

6. Haushaltsgerätesystem (1, 2) nach Anspruch 5, **dadurch gekennzeichnet, dass** die Überwachungsvorrichtung (2) dazu ausgestaltet ist,
- das Kochfeld (1) mittels der breitbandigen Infrarotlichtquelle (7) zu bestrahlen,
- von mindestens einem auf dem Kochfeld (1) befindlichen Gegenstand (G) zurückreflektiertes Infrarotlicht unterschiedlicher Spektralbereiche (S1, S2) zu erfassen und
- aus dem zurückreflektierten Infrarotlicht ein Material (M1, M2) mindestens eines auf dem Kochfeld (1) angeordneten Gegenstands (G) zu bestimmen.

7. Haushaltsgerätesystem (1, 2) nach einem der vorhergehenden Ansprüche, **dadurch gekennzeichnet, dass** die Überwachungsvorrichtung (2) zusätzlich mindestens einen Gassensor (9) aufweist, welcher selektiv auf mindestens ein küchentypisches gasförmiges Erwärmungsprodukt anschlägt

8. Haushaltsgerätesystem (1, 2) nach Anspruch 7, **dadurch gekennzeichnet, dass** der mindestens eine Gassensor (9) mindestens einen Metalloxid- Gassensor und/oder mindestens einen FET-Gassensor umfasst.

9. Haushaltsgerätesystem (1, 2) nach Anspruch 7 oder 8, **dadurch gekennzeichnet, dass** mindestens ein Gassensor (9) selektiv auf mindestens ein gasförmiges Erwärmungsprodukt von Lebensmitteln und/oder auf mindestens ein Brandgas anschlägt.

10. Verfahren zum Überwachen eines Kochfelds (1), wobei
- zumindest ein Teil des Kochfelds (1) mittels einer Infrarotmessung in einem ersten Spektralbereich (S1) aus einer Position oberhalb des zu überwachenden Kochfelds (1) überwacht wird und
- das Kochfeld (1) zusätzlich mittels mindestens einer weiteren Infrarotmessung in einem zweiten und vom ersten Spektralbereich (S1) unterschiedlichen Spektralbereich (S2) aus einer Position oberhalb des zu überwachenden Kochfelds (1) überwacht wird, **dadurch gekennzeichnet, dass**
- zumindest ein Teil des Kochfelds (1) mittels einer ortsaufgelösten Infrarotmessung mit zumindest im Wesentlichen deckungsgleichen Blickfeldern (B) und mit zumindest im Wesentlichen deckungsgleichen Ortsauflösungsmustern (R1, R2) in dem ersten Spektralbereich (S1) und in dem zweiten Spektralbereich (S2) überwacht wird.

## Claims

1. Household appliance system (1, 2) with at least one hob (1) and a monitoring device (2) arranged above the hob (1) to be monitored, wherein
- the monitoring device (2) has a first infrared sensor (4) for the infrared measurement of the hob (1) in a first spectral range (S1) and at least one second infrared sensor (5) for the infrared measurement of the hob (1) in a second spectral range (S2) and wherein
- the spectral ranges (S1, S2) are different,
**characterised in that**
- the first infrared sensor (4) and the second infrared sensor (5) are set up in each case for the spatially resolved infrared measurement of the hob (1) and that
- the infrared sensors (4, 5) have an at least essentially congruent field of view (B) and an at least essentially congruent spatial resolution pattern (R1, R2).

2. Household appliance system (1, 2) according to claim 1, **characterised in that** at least the first infrared sensor (4) has a field of individual sensors.

3. Household appliance system (1, 2) according to one of the preceding claims, **characterised in that** the monitoring device (2) for the execution of multichannel pyrometry for the determination of a temperature of objects (G) placed on the hob (1), independently of their emissivity.

4. Household appliance system (1, 2) according to one of the preceding claims, **characterised in that**
- at least one of the infrared sensors (5) has a spectral range (S2), which has at least one transmission range of a glass-ceramic, and that
- the monitoring device (2) is set up to indicate an uncovered hotplate (6d) from the presence of a pulsing typical for a heating element (9d) in a sensor signal of this at least one infrared sensor (5), **in that**
- the monitoring device (2) is embodied to detect an uncovered hotplate (6d) **in that** a sensed temperature lies at least regularly above a predetermined threshold value.

5. Household appliance system (1, 2) according to one of the preceding claims, **characterised in that**
- the monitoring device (2) has at least one infrared light source (7), which is set up and arranged for the irradiation of infrared light in the direction of the hob (1) and that
- the infrared light source (7) is a broadband infrared light source, whose infrared light comprises the spectral ranges (S1, S2) of at least two infrared sensors (4, 5).

6. Household appliance system (1, 2) according to claim 5, **characterised in that** the monitoring device (2) is embodied
- to irradiate the hob (1) by means of the broadband infrared light source (7),
- to capture infrared light of different spectral ranges (S1, S2) reflected from at least one object (G) located on the hob (1) and
- to identify the material (M1, M2) of at least one object (G) arranged on the hob (1) from the infrared light reflected back.

7. Household appliance system (1, 2) according to one of the preceding claims, **characterised in that** the monitoring device (2) has in addition at least one gas sensor (9), which selectively responds to at least one gaseous product of heating typically occurring in a kitchen

8. Household appliance system (1, 2) according to claim 7, **characterised in that** the at least one gas sensor (9) comprises at least one metal oxide gas sensor and/or at least one FET gas sensor.

9. Household appliance system (1, 2) according to claim 7 or 8, **characterised in that** at least one gas sensor (9) responds selectively to at least one gaseous product of heating of foodstuffs and/or to at least one combustion gas.

10. Method for the monitoring of a hob (1), wherein
- at least one part of the hob (1) is monitored by means of an infrared measurement in a first spectral range (S1) from a position above the hob to be monitored (1) and
- the hob (1) is additionally monitored by means of at least one further infrared measurement in a second spectral range (S2) different from the first spectral range (S1) from a position above the hob (1) to be monitored,
**characterised in that**
- at least one part of the hob (1) is monitored by means of a spatially resolved infrared measurement with at least essentially congruent fields of view (B) and with at least essentially congruent spatial resolution patterns (R1, R2) in the first spectral range (S1) and in the second spectral range (S2).

## Revendications

1. Système d'appareils ménagers (1, 2) comprenant au moins une table de cuisson (1) et un dispositif de surveillance (2) monté au-dessus de la table de cuisson (1) à surveiller, dans lequel
- le dispositif de surveillance (2) comporte un premier capteur infrarouge (4) pour la mesure infrarouge de la table de cuisson (1) dans une première région spectrale (S1) et au moins un deuxième capteur infrarouge (5) pour la mesure infrarouge de la table de cuisson (1) dans une deuxième région spectrale (S2) et dans lequel
- les régions spectrales (S1, S2) sont différentes,
**caractérisé en ce que**
- le premier capteur infrarouge (4) et le deuxième capteur infrarouge (5) sont conçus chacun pour la mesure infrarouge à résolution spatiale de la table de cuisson (1) et **en ce que**
- les capteurs infrarouges (4, 5) possèdent un champ de vision (B) sensiblement coïncident et un modèle de résolution spatiale (R1, R2) sensiblement coïncident.

2. Système d'appareil ménager (1, 2) selon la revendication 1, **caractérisé en ce qu'**au moins le premier capteur infrarouge (4) comporte un champ de capteurs individuels.

3. Système d'appareil ménager (1, 2) selon l'une des revendications précédentes, **caractérisé en ce que** le dispositif de surveillance (2) est conçu pour effectuer une pyrométrie multicanal permettant de déterminer une température d'objets (G) posés sur la table de cuisson (1), indépendamment de leur degré d'émission..

4. Système d'appareil ménager (1, 2) selon l'une des revendications précédentes, **caractérisé en ce que**
- au moins un des capteurs infrarouges (5) présente une région spectrale (S2) comportant au moins une zone de transmission d'une vitrocéramique, et **en ce que**
- le dispositif de surveillance (2) est conçu pour conclure d'une présence d'un cadencement typique d'un corps de chauffe (9d) dans un signal de capteur dudit au moins un capteur infrarouge (5) à un foyer (6d) non couvert grâce au fait que
- le dispositif de surveillance (2) est configuré pour identifier un foyer (6d) non couvert par le fait qu'une température détectée est située au moins régulièrement au-dessus d'une valeur seuil prédéterminée.

5. Système d'appareil ménager (1, 2) selon l'une des revendications précédentes, **caractérisé en ce que**
- le dispositif de surveillance (2) comporte au moins une source de lumière infrarouge (7), conçue et disposée de façon à émettre de la lumière infrarouge en direction de la table de cuisson (1), et **en ce que**
- ladite source de lumière infrarouge (7) est une source de lumière infrarouge à large bande, dont la lumière infrarouge comprend les régions spectrales (S1, S2) d'au moins deux capteurs infrarouges (4, 5).

6. Système d'appareil ménager (1, 2) selon la revendication 5, **caractérisé en ce que** le dispositif de surveillance (2) est conçu pour
- irradier la table de cuisson (1) au moyen de la source de lumière infrarouge (7),
- détecter la lumière infrarouge de régions spectrales différentes (S1, S2) renvoyée par au moins un objet (G) se trouvant sur la table de cuisson (1) et
- déterminer à partir de la lumière infrarouge renvoyée une matière (M1, M2) d'au moins un objet (G) placé sur la table de cuisson (1).

7. Système d'appareil ménager (1, 2) selon l'une des revendications précédentes, **caractérisé en ce que** le dispositif de surveillance (2) comporte en plus au moins un capteur de gaz (9), réagissant sélectivement à au moins un produit de réchauffement gazeux typique d'une cuisine.

8. Système d'appareil ménager (1, 2) selon la revendication 7, **caractérisé en ce que** ledit au moins un capteur de gaz (9) comprend au moins un capteur de gaz d'oxyde métallique et/ou au moins un capteur de gaz FET.

9. Système d'appareil ménager (1, 2) selon la revendication 7 ou 8, **caractérisé en ce qu'**au moins un capteur de gaz (9) réagit sélectivement à au moins un produit de réchauffement gazeux de denrées alimentaires et/ou à au moins un gaz d'incendie.

10. Procédé de surveillance d'une table de cuisson (1), dans lequel
- au moins une partie de la table de cuisson (1) est surveillée au moyen d'une mesure infrarouge dans une première région spectrale (S1) à partir d'une position au-dessus de la table de cuisson (1) à surveiller et
- la table de cuisson (1) est surveillée en plus au moyen d'au moins une autre mesure infrarouge dans une deuxième région spectrale (S2), différente de la première région spectrale (S1), à partir d'une position au-dessus de la table de cuisson (1) à surveiller,
**caractérisé en ce que**
- au moins une partie de la table de cuisson (1) est surveillée dans la première région spectrale (S1) et dans la deuxième région spectrale (S2) au moyen d'une mesure infrarouge à résolution spatiale avec des champs de vision (B) au moins sensiblement coïncidents et avec des modèles de résolution spatiale (R1, R2) au moins sensiblement coïncidents.
